# EUROPEAN PATENT SPECIFICATION

(11) **EP 0 422 527 B1**
(45) Date of publication and mention of the grant of the patent: **21.12.1994**
(21) Application number: 90119173.4
(22) Date of filing: 05.10.1990
(51) Int. Cl.: B60N 2/36

(54) **A device for tilting the backrest of a vehicle seat, particularly the rear seats of motor cars**
Vorrichtung zum Umklappen einer Rückenlehne eines Fahrzeugsitzes, insbesondere eines Rücksitzes eines Kraftfahrzeuges
Dispositif pour rabattre le dossier d'un siège de véhicule, en particulier d'un siège arrière d'un véhicule à moteur

(30) Priority: 10.10.1989 IT 6786989
(43) Date of publication of application: 17.04.1991
(73) Proprietor: FIAT AUTO S.p.A., 10135 Torino (IT)
(72) Inventor: Acuto, Giovanni, I-10043 Orbassano, Torino (IT); Vitale, Carlo, I-10042 Nichelino, Torino (IT)
(74) Representative: Bosotti, Luciano

(56) References cited:
- FR-A- 1 182 761
- FR-A- 2 605 565
- FR-A- 2 634 430

## Description

The present invention relates to devices for tilting the backrest of seats, for example, the rear seats of motor cars, and is particularly concerned with a backrest-tilting device for use on seats including a squab with a rear region from which the backrest is upstanding, the backrest being intended to be tilted forwards towards the squab from at least one erect position, when desired, and in which the squab can be oriented selectively between a substantially horizontal position of normal use and a position in which it is tilted forwards with its rear region raised.

Seats of the type specified above are currently used as rear seats in motor cars. The backrest is tilted forwards after the squab has been tilted forwards against the backrests of the front seats, essentially to extend towards the front of the load compartment behind the front seat.

More specifically, the present invention aims to provide a tilting device which enables the backrest to be tilted forwards not only after the squab has already been tilted forwards, but also when the squab is kept in the horizontal position of normal use so that the backrest lies, so to speak, against the squab. This operative solution, which should be considered known - see, for example, the document FR-A-2 605 565 after which the preamble of Claim 1 was patterned - has the advantage that it enables the rear load compartment of the motor vehicle to be extended (for example, for transporting bulky items) without the need necessarily to tilt the squab forwards beforehand, since this operation can be quite inconvenient to carry out. Moreover, the ability to tilt the backrest of the rear seat of a motor car forwards without the need necessarily to tilt the squab forwards as well is appreciated particularly in situations in which the backrest of the rear seat (the bench seat) is divided into two separate parts. In this case, part of the backrest can be folded down whilst the other part is kept in the normal erect position so as to enable transport of a passenger; this is achieved without necessarily having to provide a squab which is also divided into two parts.

The object of the present invention, therefore, is to provide a backrest-tilting device which can achieve the double backrest-tilting function described and has a structure which is intrinsically simple and reliable both as regards its operation and as regards the need to retain the necessary structural rigidity of the seat as a whole, particularly in conditions of normal use with the backrest erect, without any movement or vibration of the parts.

According to the present invention, this object is achieved by virtue of a tilting device of the aforementioned type, having the further characteristics called for in Claim 1.

The invention will now be described, purely by way of non-limiting example, with reference to the appended drawings, in which:
Figures 1 to 3 show schematically three different possible operating positions of a motor-car seat incorporating a tilting device according to the invention,
Figure 4 is an exploded general view of the device according to the invention,
Figure 5 shows a first possible tilting function which can be achieved with the device according to the invention, and
Figures 6 and 7 show , in sequence, another possible tilting function which can be achieved with the device according to the invention.

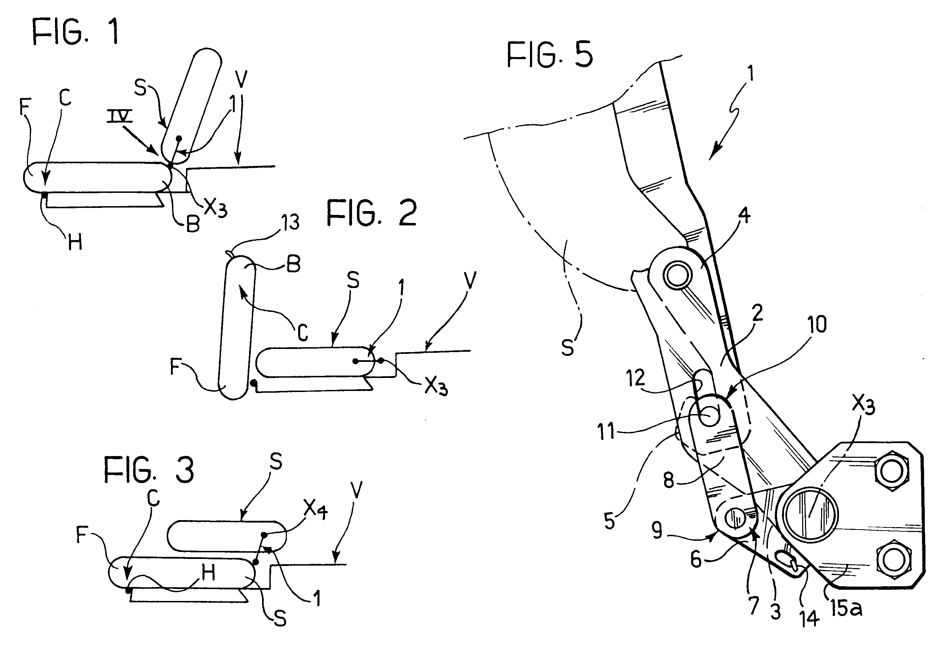

In Figures 1 to 3, the sitting part ("squab" for short) and the backrest of the rear seat (the so-called "bench seat") of a motor car are indicated C and S respectively, the car as a whole not being shown, except for the front part of the load compartment (boot) V situated immediately behind the backrest S.

A front region F and a rear region B can be distinguished within the squab C as a whole, the terms "front" and "rear" (and the term "forwards" and the like) as used in the present description and the claims which follow naturally referring to the normal direction of travel of the vehicle.

The squab C is connected to the structure of the vehicle in correspondence with its front region F by means of hinge elements H with horizontal axes so that, when desired, it can be pivoted from a generally horizontal position of normal use (the position shown in Figures 1 and 3) to a position in which it is tilted forwards (Figure 2) with its rear region B raised and the squab situated more or less in a vertical position against the backrests of the front seats.

In these conditions (still with reference to Figure 2), the backrest S can in turn be tilted (folded) forwards until it occupies the space previously occupied by the squab C, with its back (the rear surface of the backrest S) substantially aligned with the floor of the load compartment V.

This result is achieved by virtue of a tilting device usually including two hinge units 1 (only one of which - that is, the one situated on the left-hand side of the seat - is visible in the drawings) arranged in substantially symmetrical positions on the two sides of the backrest S, that is, of the seat as a whole. Naturally, in the case of seats in which the backrest S is divided into two parts, two hinge units 1 are normally provided for each part of the backrest and are arranged in symmetrical positions on the two sides or flanks of the part.

The main characteristic of the device according to the invention is that, as well as the function of general tilting of the backrest S, shown with reference to Figure 2, it also offers an additional tilting function, shown in Figure 3, in which the squab C is kept in the position of normal use and the backrest S is tilted forwards from its normal erect position (Figure 1) until it lies against the rear surface of the squab C.

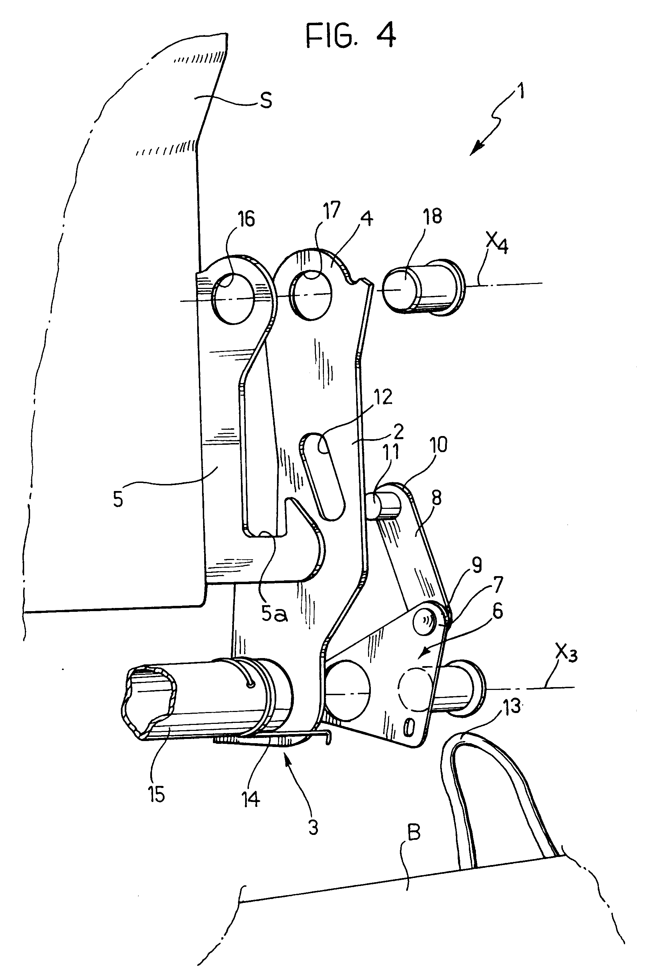

As can better be seen in the exploded view of Figure 4, each hinge unit 1 is constituted essentially by an assembly of kinematic elements which are preferably produced in the form of profiled metal parts by blanking, punching or bending operations from sheet metal of a certain thickness (for example 2-3 mm) such as to provide them with good mechanical strength.

By way of summary, each hinge unit 1 is constituted by the following parts:
- a pivoting arm 2 whose lower and upper ends, 3 and 4 respectively, define the generally horizontal axes X₃, X₄ about which the forward tilting of the backrest S takes place in the conditions shown in Figure 2 and Figure 3 respectively,
- a hooked formation 5 mounted on the backrest S so as to be fixed thereto,
- a crank body 6 mounted for pivoting about an axis (which in practice coincides with the pivot axis X₃ of the lower end 3 of the arm 2) and having a free end 7 which is generally eccentric relative to the axis X₃,
- a connecting rod 8 with a first end 9 articulated to the free end 7 of the crank body 6 and a second end 10 with a pin 11 which projects through a slot 12 in the pivoting arm 2 to a position in which it engages the hooked formation 5 fixed to the backrest S,
- a reaction element 13 constituted by a rigid arch projecting from the rear region B of the squab C so as to oppose the forward pivoting movement of the crank body 6 according to criteria which will be explained further below, and, preferably,
- a torsion spring 14 arranged near the lower end 3 of the arm 2 and intended to act on the crank body 6 so as to urge the crank body 6 to pivot forwardly to a position of abutment with the retaining member 13.

More specifically, it may be noted that the crank body 6 and the connecting rod 8 are arranged outwardly of the seat relative to the arm 2, that is, on the opposite side from the hooked formation 5 which is fixed to the backrest S. In other words, the arm 2 is "sandwiched" between the formation 5 and the unit formed by body 6 and connecting rod 8.

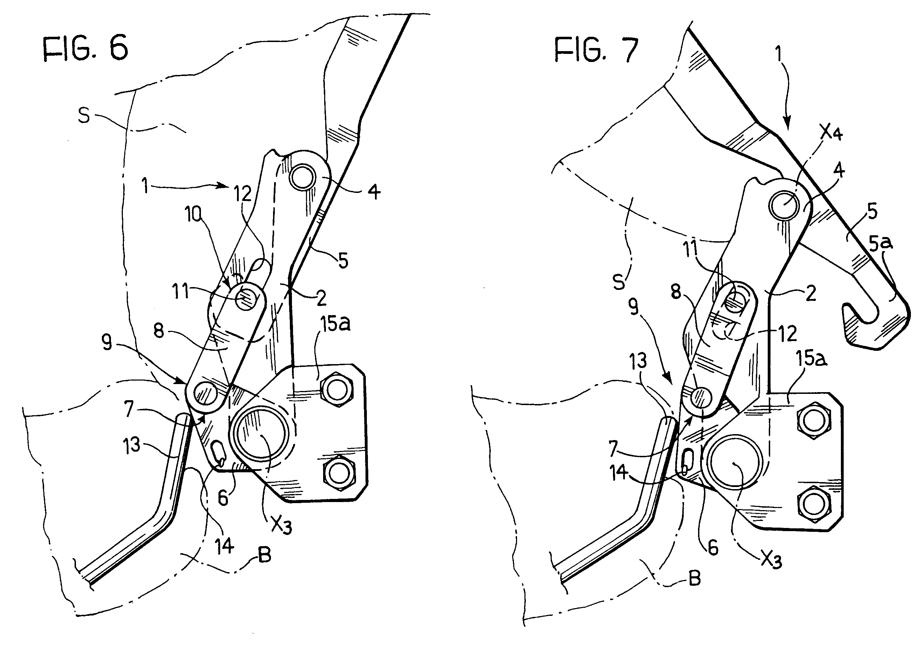

The first tilting axis X₃ of the backrest is defined in practice by a shaft 15 (clearly visible only in Figure 4) which extends to interconnect the lower ends 3 of the pivoting arms 2 of the hinge units 1 situated on opposite sides of the seat. The shaft 15, and hence the lower ends 3 of the two hinge units, is kept a fixed position relative to the structure of the motor vehicle since it is mounted on brackets or cantilevered plates 15a (Figures 5 to 7) which are intended to be fixed to the structure of the motor vehicle by known means (for example, by welding). The shaft 15, and hence the axis X₃, is generally coplanar with the rear region B of the squab when the squab C is in the position of normal use.

In other words, the shaft 15 is so-to-speak "behind" the rear region B of the squab C. This means that, if one attempts to tilt the backrest S forwards about the axis X₃ whilst the squab C remains in the horizontal position of normal use, the tilting movement beyond a certain angle of tilting is obstructed as a result of the interference between the rear region B of the squab and the rear region of the backrest S.

However, the upper end 4 of the arm 2, and hence the axis X₄, are situated above the rear region B of the squab C. This means that, when the backrest S is tilted forwards so as to pivot about the axis X₄ (according to criteria which will be explained further below), the folding movement is not obstructed by the squab C and the backrest S can lie against the upper surface of the squab C.

When the backrest S is in its normal, erect position used when travelling with a seated passenger, the arm 2 is in a more or less vertical position and the slot 12, which passes through it in an approximately central position between the ends 3 and 4, is also oriented more or less vertically. In fact, the slot 12 is substantially coextensive with the arm 2 and is usually substantially rectilinear.

The hooked formation 5 is fixed to the backrest S so as to open towards the front surface of the backrest S, that is, in the direction of forward tilting of the backrest S.

Within the hooked formation (which may be screwed or welded to the structure of the backrest S or may possibly form an integral part of that structure) can be distinguished an upper end with an eye 16 which is intended to be aligned with a corresponding eye 17 in the upper end 4 of the arm 2 so as to form a seat for the insertion of a pin 18 for connecting the arm 2 to the structure of the backrest S so that it can pivot about the axis X₄.

This pivoting movement is generally prevented by the engagement of the pin 11, which extends through the slot 12, with the lower hooked part 5a of the formation 5.

The overall length of the hooked formation 5 must therefore be correlated with the dimensions (length) of the slot 12 so that, when the pin 11 abuts the lower end of the slot 12, the pin is engaged securely by the hooked part 5a of the formation 5. This condition, which is reached when the backrest S is in the erect position with the squab C horizontal, is securely maintained as a result of the biassing action of the spring 14. In fact, the spring in question tends to rotate the crank body 6 forwardly and this in turn draws the connecting rod 8 in the same sense (that is, downwardly) consequently urging the pin 11 into abutment with the lower end of the slot 12.

For this reason, when the squab C is tilted forwards, raising the rear region B and the reaction element 13 fixed thereto, a forward force is subsequently exerted on the backrest S (after the safety retaining members - not shown - which keep the backrest S in its normal erect position at its upper end have been released) and causes a general pivoting of the unit constituted by the arm 2, the crank body 6 and the connecting rod 8 without any relative movement between these parts.

Under these conditions, which are those shown in Figure 5, the pin 11 remains securely engaged in the hooked formation 5 so that the arm 2 retains a fixed position relative to the backrest S which therefore executes a general forward tilting movement about the axis X₃ defined by the lower end 3 of the arm 2 (Figure 2).

However, the situation is different when the backrest S is pushed forwards without the squab C having been raised beforehand.

In these circumstances, the reaction element 13 fixed to the rear region B of the squab fulfils its function of preventing the crank body 6 from pivoting forwardly (Figure 6).

The general forward pivoting movement of the arm 2 induced by the force applied to the backrest S is consequently translated into a movement of the arm 2 relative to the crank body 6 and the connecting rod 8 connected thereto. This relative movement causes the pin 11 connected to the connecting rod 8 to slide upwards in the slot 12 and be released from the hooked part 5a of the formation 5.

As a result of the release of the pin 11 from the formation 5 (Figure 7), there is no longer a rigid connection between the arm 2 and the backrest S as a whole.

The backrest S is therefore free to tilt forwards, pivoting about the axis X₄ defined by the upper end 4 of the arm 2.

The backrest S thus tilts forwards in the manner shown in Figure 3.

In both cases (tilting about the lower axis X₃ - Figure 2 - and tilting about the upper axis X₄ - Figure 3), the return of the backrest S to its erect position re-establishes the starting condition with the arm 2 in a more or less vertical position and the pin 11 urged by the connecting rod 8 against the lower end of the slot 12, into a position of engagement with the hooked part 5a of the hooked formation 5. This result is ensured by the presence of the spring 14 which is fitted around the shaft 15 and biasses the connecting rod 8 downwards by means of the crank body 6.

Naturally, the principle of the invention remaining the same, the forms of embodiment and details of construction may be varied with respect to those described and illustrated, while however remaining within the scope of the present invention as defined by the appended claims. This is particularly true of the axis of articulation of the crank body 6 which need not necessarily coincide with the axis X₃ as long as it is situated near that axis.

## Claims

1. A device for tilting the backrest (S) of a seat including a squab (C) with a rear region (B) from which the backrest (S) is upstanding, the backrest (S) being intended to be tilted forwards towards the squab (C) from at least one erect position, when desired, and in which the squab (C) can be oriented selectively between a substantially horizontal position of normal use and a position in which it is tilted forwards with its rear region (B) raised, said device comprising at least one hinge unit (1) for the backrest (S) including a pivoting arm (2) with a lower end (3) which defines a first tilting axis (X₃) of the backrest (S) and is articulated (15) in a generally fixed position coplanar with the rear region (B) of the squab (C) in its position of normal use, and an upper end (4) which defines a second tilting axis (X₄) of the backrest (S) and is articulated (18) to the backrest (S) in a position generally above the rear region (B) of the squab (C) in its position of normal use, whereby a force exerted on the backrest (S) in its sense of forward tilting causes a pivoting movement of the backrest (S) about said first (X₃) and said second (X₄) axis, respectively, depending on whether the squab (C) is in the position in which it is tilted forward or in its position of normal use, characterised in that said pivoting arm (2) carries associated sliding guide means (12) substantially coextensive with the arm (2), and said hinge unit (1) further includes:
- a hooked formation (5, 5a) mounted on the backrest (S) so as to coincide substantially with the sliding guide means (12) when the backrest (S) is in the erect position, the hooked formation (5, 5a) opening in the direction of forward tilting of the backrest (S),
- a crank body (6) articulated substantially about the first tilting axis (X₃) and having a free end (7) which is generally eccentric relative to the first tilting axis (X₃),
- a connecting rod (8) with a first end (9) connected to the free end (7) of the crank body (6) and a second end (10) which cooperates slidingly (11) with the sliding guide means (12) and has engagement means (11) which can cooperate with the hooked formation (5, 5a), and
- a reaction element (13) associated with the rear region (B) of the squab (C) in order to obstruct the forward pivoting of the crank body (6) when the squab (C) is in its position of normal use,
the arrangement being such that:
- when the squab (C) is in the position in which it is tilted forwards said reaction element (13) is consequently released from the crank body (6) as a result of the raising of the rear region (B) of the squab (C), whereby said force exerted on the backrest (S) causes a general pivoting movement of the pivoting arm (2), the crank body (6) and the connecting rod (8), substantially without any relative movements, so that the engagement means (11) remain engaged in the hooked formation (5, 5a) and the backrest (S) is free to tilt forwardly about the first axis (X₃ - Figure 2), and
- when the squab (C) is in its position of normal use said crank body (6) is prevented from pivoting forwardly by the reaction element (13), whereby said force exerted on the backrest (S) causes a movement of the pivoting arm (2) relative to the crank (6), the consequent sliding of the second end (10) of the connecting rod (8) relative to the sliding guide means (12), and the release of the engagement means (11) from the hooked formation (5, 5a) so that the backrest (S) is free to tilt forwardly about the second axis (X₄) and lie against the squab (C - Figure 3).

2. A device according to Claim 1, characterised in that the crank body (6) has associated resilient means (14) for biassing it towards the reaction element (13).

3. A device according to Claim 1 or Claim 2, characterised in that the sliding guide means are constituted by a slot (12) formed in the pivoting arm, and in that the second end (10) of the connecting rod (8) has a pin (11) which can slide in the slot (12) and can engage (5a) the hooked formation (5, 5a).

4. A device according to Claim 3, characterised in that the slot (12) is substantially rectilinear.

5. A device according to any one of Claims 1 to 4, characterised in that the pivoting arm is sandwiched between the hooked formation (5, 5a) on one side and the crank body (6) and the connecting rod (8) on the other side.

6. A device according to any one of Claims 1 to 5, characterised in that the sliding guide means (12) are generally elongate with a lower end, and in that the hooked formation (5, 5a) has a hook (5a) which, when the backrest (S) is in the erect position, is substantially aligned with the lower end of the sliding guide means and the engagement means (11) so that the movement of the pivoting arm (2) relative to the crank body (6) causes the engagement means (11) to move away from the lower end of the sliding guide means (12) with the consequent release of the engagement means (11) from the hooked formation (5, 5a).

7. A device according to any one of claims 2 to 6, characterised in that the resilient biassing means are constituted by a torsion spring (14) substantially surrounding (15) the first tilting axis (X₃).

8. A device according to any one of the preceding claims, characterised in that it includes a hinge unit (1) on each side of the seat.

## Patentansprüche

1. Vorrichtung zum Umklappen der Rückenlehne (S) eines Sitzes mit einem Polster (C) mit einem hinteren Bereich (B), von dem die Rückenlehne (S) nach oben absteht, wobei die Rückenlehne (S) dazu gedacht ist, bei Bedarf aus wenigstens einer aufrechten Stellung nach vorne zu dem Polster (C) hin umgeklappt zu werden, und bei welcher das Polster (C) wahlweise zwischen einer im wesentlichen horizontalen normalen Gebrauchsstellung und einer Stellung orientiert werden kann, in der es mit angehobenem hinterem Bereich (B) nach vorne umgeklappt ist,
wobei die Vorrichtung wenigstens eine Gelenkeinheit (1) für die Rückenlehne (S) umfaßt, welche aufweist
einen Schwenkarm (2) mit einem unteren Ende (3), das eine erste Umklappachse (X₃) der Rückenlehne (S) festlegt und in einer allgemein festen Stellung koplanar zu dem hinteren Bereich (B) des Polsters (C) in dessen normalen Gebrauchsstellung angelenkt (15) ist, sowie mit einem oberen Ende (4), das eine zweite Umklappachse (X₄) der Rückenlehne (S) festlegt und an der Rückenlehne (S) in einer Position allgemein oberhalb des hinteren Bereichs (B) des Polsters (C) in dessen normaler Gebrauchsstellung angelenkt (18) ist, wobei eine auf die Rückenlehne (S) im Sinn eines Nach-vorne-Umklappens ausgeübte Kraft eine Schwenkbewegung der Rückenlehne (S) um die erste (X₃) bzw. die zweite (X₄) Achse hervorruft in Abhängigkeit davon, ob das Polster (C) sich in der nach vorne umgeklappten Stellung oder in seiner normalen Gebrauchsstellung befindet, **dadurch gekennzeichnet**, daß der Schwenkarm (2) zugeordnete Gleitführungsmittel (12) aufweist, die sich im wesentlichen in der gleichen Richtung wie der Arm (2) erstrecken und die Gelenkeinheit (1) ferner umfaßt:
- ein Hakengebilde (5, 5a), das an der Rückenlehne (S) derart angebracht ist, daß es mit den Gleitführungsmitteln (12) im wesentlichen übereinstimmt, wenn die Rückenlehne (S) sich in der aufrechten Stellung befindet, wobei sich das Hakengebilde (5, 5a) in Richtung des Nach-vorne-Umklappens der Rückenlehne (S) öffnet,
- einen Kurbelkörper (6), der im wesentlichen um die erste Umklappachse (X₃) verschwenkbar ist und ein freies Ende (7) aufweist, welches relativ zur ersten Umklappachse (X₃) allgemein exzentrisch ist,
- eine Verbindungsstange (8) mit einem ersten Ende (9), das mit dem freien Ende (7) des Kurbelkörpers (6) verbunden ist, und mit einem zweiten Ende (10), das gleitend (11) mit den Gleitführungsmitteln (12) zusammenwirkt und Eingriffsmittel (11) aufweist, welche mit dem Hakengebilde (5, 5a) zusammenwirken können, und
- ein Reaktionselement (13), das dem hinteren Bereich (B) des Polsters (C) zugeordnet ist, um das Nach-vorne-Verschwenken des Kurbelkörpers (6) zu behindern, wenn sich das Polster (C) in seiner normalen Gebrauchsstellung befindet,
wobei die Anordnung derart ist, daß:
- das Reaktionselement (13) dann, wenn sich das Polster (C) in der nach vorne umgeklappten Stellung befindet, folglich von dem Kurbelkörper (6) infolge des Anhebens des hinteren Bereichs (B) des Polsters (C) freigegeben ist, wobei die auf die Rückenlehne (S) ausgeübte Kraft eine allgemeine Schwenkbewegung des Schwenkarms (2), des Kurbelkörpers (6) und der Verbindungsstange (8) im wesentlichen ohne Relativbewegungen hervorruft, so daß die Eingriffsmittel (11) mit dem Hakengebilde (5, 5a) in Eingriff bleiben und die Rückenlehne (S) frei ist, um die Achse (X₃ - Figur 2) nach vorne umzuklappen, und
- der Kurbelkörper (6) dann, wenn das Polster (C) sich in seiner normalen Gebrauchsstellung befindet, durch das Reaktionselement (13) an einem Nach-vorne-Verschwenken gehindert ist, wobei die auf die Rückenlehne (S) ausgeübte Kraft eine Bewegung des Schwenkarms (2) relativ zu der Kurbel (6), das folgliche Gleiten des zweiten Endes (10) der Verbindungsstange (8) relativ zu den Gleitführungsmitteln (12) und die Freigabe der Eingriffsmittel (11) von dem Hakengebilde (5, 5a) hervorruft, so daß die Rückenlehne (S) frei ist, um die zweite Achse (X₄) nach vorne umzuklappen und sich gegen das Polster (C - Figur 3) anzulegen.

2. Vorrichtung nach Anspruch 1, **dadurch gekennzeichnet**, daß der Kurbelkörper (6) zugeordnete elastische Mittel (14) aufweist, um ihn zu dem Reaktionselement (13) hin vorzuspannen.

3. Vorrichtung nach Anspruch 1 oder Anspruch 2, **dadurch gekennzeichnet**, daß die Gleitführungsmittel von einem Schlitz (12) gebildet sind, der in dem Schwenkarm ausgebildet ist, und daß das zweite Ende (10) der Verbindungsstange (8) einen Stift (11) aufweist, der in dem Schlitz (12) gleiten kann und mit dem Hakengebilde (5, 5a) in Eingriff (5a) stehen kann.

4. Vorrichtung nach Anspruch 3, **dadurch gekennzeichnet**, daß der Schlitz (12) im wesentlichen geradlinig ist.

5. Vorrichtung nach einem der Ansprüche 1 bis 4, **dadurch gekennzeichnet**, daß der Schwenkarm sandwichartig zwischen dem Hakengebilde (5, 5a) einerseits und dem Kurbelkörper (6) und der Verbindungsstange (8) andererseits angeordnet ist.

6. Vorrichtung nach einem der Ansprüche 1 bis 5, **dadurch gekennzeichnet**, daß die Gleitführungsmittel (12) allgemein länglich sind mit einem unteren Ende und daß das Hakengebilde (5, 5a) einen Haken (5a) aufweist, der dann, wenn sich die Rückenlehne (S) in der aufrechten Stellung befindet, zu dem unteren Ende der Gleitführungsmittel und der Eingriffsmittel (11) im wesentlichen ausgerichtet ist, so daß die Bewegung des Schwenkarms (2) relativ zum Kurbelkörper (6) bewirkt, daß die Eingriffsmittel (11) sich von dem unteren Ende der Gleitführungsmittel (12) wegbewegen mit folglicher Freigabe der Eingriffsmittel (11) von dem Hakengebilde (5, 5a) .

7. Vorrichtung nach einem der Ansprüche 2 bis 6, **dadurch gekennzeichnet**, daß die elastischen Vorspannmittel von einer Torsionsfeder (14) gebildet sind, die die erste Umklappachse (X₃) im wesentlichen umgibt (15).

8. Vorrichtung nach einem der vorhergehenden Ansprüche, **dadurch gekennzeichnet**, daß sie auf jeder Seite des Sitzes eine Gelenkeinheit (1) umfaßt.

## Revendications

1. Dispositif de basculement du dossier (S) d'un siège comprenant une assise rembourrée (C) ayant une région arrière (B) à partir de laquelle le dossier (S) dépasse vers le haut, le dossier (S) étant destiné à basculer vers l'avant, vers l'assise rembourrée (C) depuis une position dressée au moins, à volonté, et dans lequel l'assise rembourrée (C) peut être orientée sélectivement entre une position pratiquement horizontale d'utilisation normale et une position dans laquelle elle a basculé vers l'avant, sa région arrière (B) étant soulevée, le dispositif comprenant au moins un élément d'articulation (1) du dossier (S) qui comprend un bras pivotant (2) ayant une extrémité inférieure (3) qui délimite un premier axe de basculement (X₃) du dossier (S) et qui est articulée (15) en position générale fixe coplanaire à la région arrière (B) de l'assise rembourrée (C) dans sa position d'utilisation normale, et une extrémité supérieure (4) qui délimite un second axe de basculement (X₄) du dossier (S) et qui est articulée (18) sur le dossier (S) dans une position qui se trouve de manière générale au-dessus de la région arrière (B) de l'assise rembourrée (C) dans sa position d'utilisation normale, si bien qu'une force appliquée sur le dossier (S) dans le sens de basculement vers l'avant provoque un mouvement de pivotement du dossier (S) autour du premier axe (X₃) et du second axe (X₄) selon que l'assise rembourrée (C) se trouve dans la position dans laquelle elle a basculé vers l'avant ou dans la position d'utilisation normale, caractérisé en ce que le bras pivotant (2) porte un dispositif associé (12) de guidage de coulissement ayant pratiquement la même longueur que le bras (2), et l'élément d'articulation (1) comporte en outre :
- un organe conformé (5, 5a) muni d'un crochet, monté sur le dossier (S) afin qu'il coïncide pratiquement avec le dispositif (12) de guidage coulissant lorsque le dossier (S) est dans la position dressée, l'organe conformé (5, 5a) à crochet débouchant dans le sens de basculement vers l'avant du dossier (S),
- un corps basculant (6) articulé pratiquement autour du premier axe de basculement (X₃) et ayant une extrémité libre (7) qui est excentrique de façon générale par rapport au premier axe de basculement (X₃),
- une bielle (8) ayant une première extrémité (9) raccordée à l'extrémité libre (7) du corps basculant (6) et une seconde extrémité (10) qui coopère par coulissement (11) avec le dispositif (12) de guidage coulissant et qui possède un dispositif (11) de coopération qui peut travailler avec l'organe conformé (5, 5a) à crochet, et
- un élément (13) de réaction associé à la région arrière (B) de l'assise rembourrée (C) afin que le pivotement vers l'avant du corps basculant (6) soit gêné lorsque l'assise rembourrée (C) est dans sa position d'utilisation normale,
la disposition étant telle que :
- lorsque l'assise rembourrée (C) est dans la position dans laquelle elle a basculé vers l'avant, l'élément de réaction (13) est en conséquence libéré du corps (6) du fait du soulèvement de la région arrière (B) de l'assise rembourrée (C) si bien que la force appliquée au dossier (S) provoque un mouvement de pivotement général du bras pivotant (2), du corps basculant (6) et de la bielle (8), pratiquement sans aucun mouvement relatif, si bien que le dispositif de coopération (11) reste en coopération avec l'organe conformé (5, 5a) à crochet et le dossier (S) est libre de basculer vers l'avant autour du premier axe (X₃, figure 2), et
- lorsque l'assise rembourrée (C) est dans sa position d'utilisation normale, le pivotement vers l'avant du corps basculant (6) est empêché par l'élément de réaction (13), si bien que la force appliquée au dossier (S) provoque un déplacement du bras pivotant (2) par rapport au corps basculant (6), le coulissement correspondant de la seconde extrémité (10) de la bielle (8) par rapport au dispositif de guidage coulissant (12), et la libération du dispositif (11) de coopération et de l'organe conformé (5, 5a) à crochet si bien que le dossier (S) est libre de basculer vers l'avant autour du second axe (X₄) et de venir s'appliquer contre l'assise rembourrée (C, figure 3).

2. Dispositif selon la revendication 1, caractérisé en ce que le corps basculant (6) possède un dispositif élastique (14) qui lui est associé et qui est destiné à le rappeler vers l'élément de réaction (13).

3. Dispositif selon la revendication 1 ou 2, caractérisé en ce que le dispositif de guidage de coulissement est constitué par une fente (12) formée dans le bras pivotant, et la seconde extrémité (10) de la bielle (8) a un axe (11) qui peut coulisser dans la fente (12) et qui peut venir coopérer (5a) avec l'organe conformé (5, 5a) ayant un crochet.

4. Dispositif selon la revendication 3, caractérisé en ce que la fente (12) est pratiquement rectiligne.

5. Dispositif selon l'une quelconque des revendications 1 à 4, caractérisé en ce que le bras pivotant est disposé entre l'organe conformé (5, 5a) à crochet d'un côté et le corps basculant (6) et la bielle (8) de l'autre côté.

6. Dispositif selon l'une quelconque des revendications 1 à 5, caractérisé en ce que le dispositif (12) de guidage de coulissement est allongé de façon générale et a une extrémité inférieure, et l'organe conformé (5, 5a) possède un crochet (5a) qui, lorsque le dossier (S) est en position dressée, est pratiquement aligné sur l'extrémité inférieure du dispositif de guidage de coulissement et sur le dispositif de coopération (11), si bien que le mouvement du bras pivotant (2) par rapport au corps basculant (6) provoque un éloignement du dispositif (11) de coopération de l'extrémité inférieure du dispositif (12) de guidage de coulissement avec libération correspondante du dispositif de coopération (11) de l'organe conformé (5, 5a) ayant un crochet.

7. Dispositif selon l'une quelconque des revendications 2 à 6, caractérisé en ce que le dispositif élastique de rappel est constitué d'un ressort de torsion (14) qui entoure pratiquement (15) le premier axe de basculement (X₃).

8. Dispositif selon l'une quelconque des revendications précédentes, caractérisé en ce qu'il comporte un élément d'articulation (1) de chaque côté du siège.
